# EUROPEAN PATENT SPECIFICATION

(11) **EP 2 535 275 B1**
(45) Date of publication and mention of the grant of the patent: **06.08.2014**
(21) Application number: 12425109.1
(22) Date of filing: 11.06.2012
(51) Int. Cl.: B64F 5/00, B64C 9/00

(54) **Method of detecting angular excursion of aircraft wing flaps**
Verfahren zum Erfassen der Auslenkung der Flügelklappen eines Luftfahrzeugs
Procédé de detection du débattement angulaire des volets d'aile d'un aéronef

(30) Priority: 13.06.2011 IT RM20110294
(43) Date of publication of application: 19.12.2012
(73) Proprietor: Desa S.r.l., 80143 Napoli (IT)
(72) Inventor: Isernia, Marco, 80143 Napoli (IT); Isernia, Gianluca, 80143 Napoli (IT)
(74) Representative: Iannone, Carlo Luigi

(56) References cited:
- EP-A1- 0 672 585
- WO-A1-84/01426
- DE-C- 720 873
- US-A- 3 478 569

## Description

The present invention concerns a method for the detection of angular excursion of the aircraft wing flaps.

More precisely, the present invention concerns a system for the detection of angular excursion of the aircraft wing flaps, realized electronically instead of mechanically, and of simple and inexpensive use, coming out to be particularly effective in the measurement.

The aircrafts are provided with wing flaps to direct their flight path. The wing flaps are movable surfaces located on the wings and the rear part of the aircrafts.

The aircraft maintenance activities comprise the detection of the angular excursion of such flaps, to verify that they work correctly and that in the cockpit be visualized the correct values for such excursions.

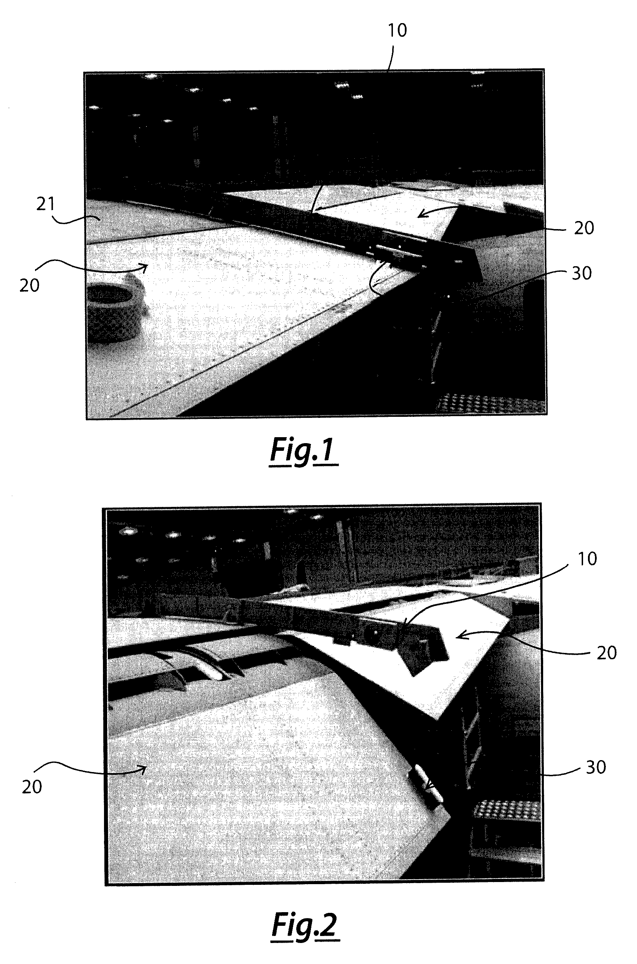

Making reference to figure 1, such a detection can be carried out, according to the prior art, by using a mechanical tool called "levelling rod". It deals with a rod 10 with graduations, made of rigid material, to be fixed of the fixed surface 21 of the wing. On the movable surface 20 of the wing, a digital inclinometer 30 is instead positioned, which provides the value of the angular excursion of such surface («flap"), when this is inclined (figure 2).

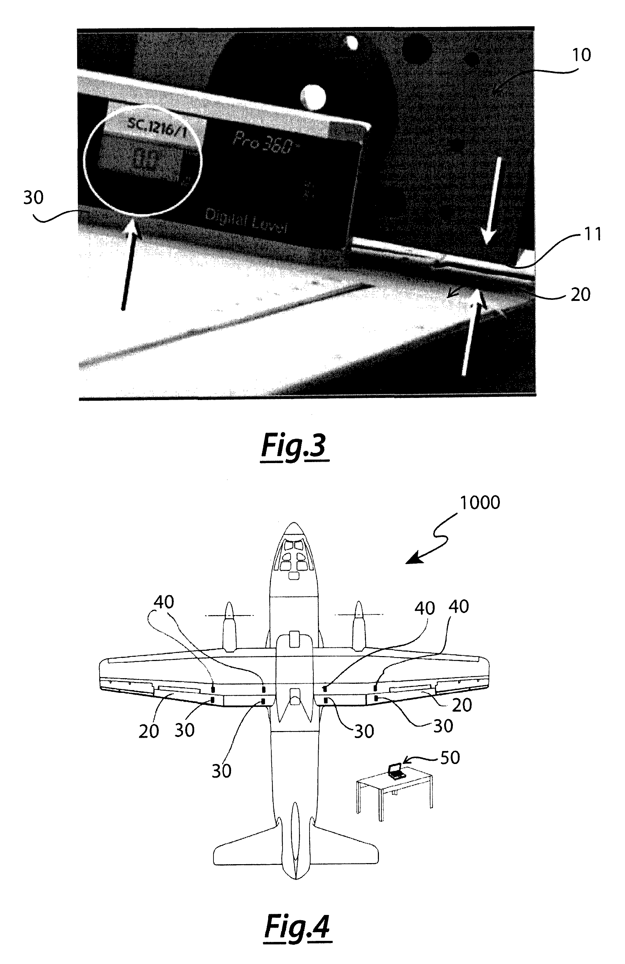

The levelling rod 10 allows, as illustrated in Figure 3, to establish the zero with respect to which one measures the inclination. The zero is obtained by assuming that the movable surface 20 and the reference 11 located on the levelling rod are in line.

The same use of a mechanical levelling rod, which covers the whole transversal surface of the wing, has the problem of possible errors due to the non-alignment of the structure with the movable surface.

The prior art technique requires the use of two operators: one has the duty of installation of the detection system; the other one has the duty of operating the controls of the cockpit. The two operators exchange data to verify the correct outcome of the test (generally by word of mouth).

The levelling rod comes out to be of difficult installation, due to its weight and dimensions, making necessary high man-hours. Moreover, such a realization is expensive.

WO 84/01426 discloses as closest prior art a method of detecting angular excursion of aircraft wing flaps comprising acquiring inclination data from a pair of inclination measuring devices, comparing the data and determining flap inclination therefrom.

It is object of the present invention to provide a system and relevant method of detection of the angular excursion of aircraft wing flaps that solves the problems and overcomes the drawbacks of the prior art.

It is subject-matter of the present invention a method for the detection of angular excursion of the aircraft wing flaps according to claim 1.

The invention will be now described by way of illustration but not by way of limitation, with particular reference to the figures of the annexed drawings, wherein:- Figure 1 shows the first step of the mechanicaldigital measurement process according to prior art; - Figure 2 shows the second step of the mechanical-digital measurement process according to the prior art, wherein the wing flap of an aircraft has been inclined for the detection; - Figure 3 shows the determination of the zero in the mechanical-digital measurement process according to the prior art; - Figure 4 shows an embodiment of a system for carrying out the method according to the invention; - Figure 5 shows a block diagram according to the invention, in an embodiment; - Figure 6 shows a kit for measuring the angular excursion.

Making reference to Figures 4, 5 and 6, the method according to the present invention provides for the use of two devices 30,40 each provided with an inclinometer and connected to a central elaboration unit. In such a way, the use of the mechanical levelling rod is overcome since the zero is determined when the readings from the two digital inclinometers are equal.

The connection to the central elaboration unit 50 allows to manage the data coming from the devices 30,40 to fix the zero and determine the inclination of the commands. The connection is advantageously wireless, in particular the devices 30,40 are provided, to this end, of ZigBee modules.

ZigBee is the name of a specification for a set of high-level communication protocols that utilizes small digital, low-power antennas and is based on the standard IEEE 802.15.4, similar to the standard IEEE 802.11 of the WiFi networks, but simpler and less expensive. The key point of a ZigBee network, which caused its choice for the system, are:
1. Low consumption, so that each single node can have a great high stand-alone capability;
2. Network of the mesh type, i.e. self-sustaining without need of Access Points (like the WiFi);
3. point-to-multipoint communication (with respect to Bluetooth, which allows only the point-to-point communication).

The central unit 50 can conveniently manage more pair of devices 30,40, so as to measure at the same time the inclinations of more flaps on the two wings of an aircraft (cf. figure 4).

The inclinometer is advantageously constituted by a high-accuracy MEMS (Analog Device ADIS16209, 2 axes, 0.1 % of accuracy). The acronym MEMS stands for "Micro Electro-Mechanical Systems" and indicates a set of devices of various nature (mechanical, electrical and electronic) integrated in a highly miniaturized form on a same Silicon substrate, in such a way to combine electrical properties of the semiconductor integrated devices with other opto-mechanical properties.

The use of the ZigBee has been limited as yet to applications in the field of domotics and industrial automation; its application in the aeronautical field constitutes a further innovation element.

Even the MEMS technology does not have precedents in the aeronautic field, since as illustrated above, the adjustments on the movable surfaces of an aircraft are mostly based on the use of levelling tools and mechanical compasses.

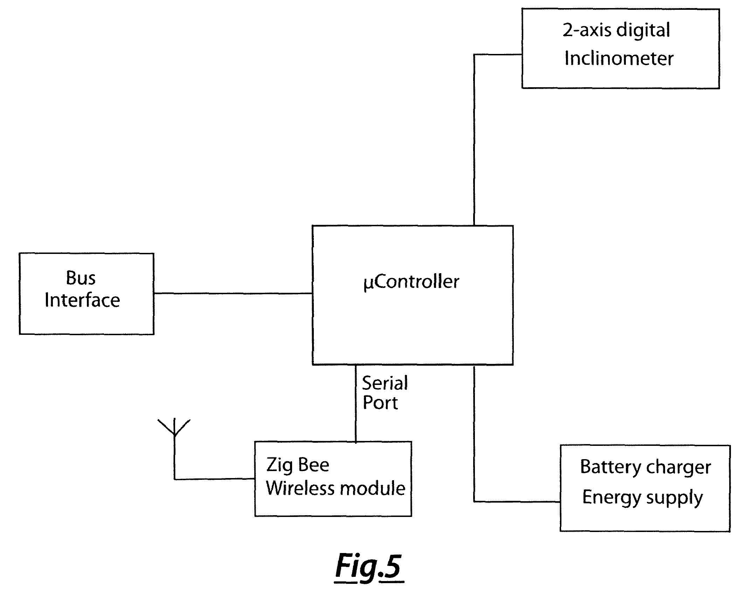

Making reference to Figure 5, each device 30,40 has been realized by using an electronic header (printed circuit) whereon there are:
1. The MEMS inclinometer;
2. ZigBee radio;
3. The microcontroller with a micro-code allowing its working;
4. The Lithium-ions battery, with relevant battery charger; 5. Auxiliary circuits. The electronic header is housed in a small container.

The functioning of the device is as follows.

When the device 30,40 is switched on, after a first auto-diagnostic step, it tries to connect to the node of the central unit 50.

The network, indeed, must be constituted by a certain number of devices and a central unit (PC), which is equipped with a ZigBee (similar to a USB-PenDrive) as well.

If the device finds the PC node, it presents itself (by indicating S/N and other information) and wait for commands.

The PC, once switched on all the devices, has the possibility, by means of a dedicated software, to interrogate all the devices that are singularly visible, and therefore to know the x-y angles of inclination with respect to the ground, wherefrom the due conclusion can be derived.

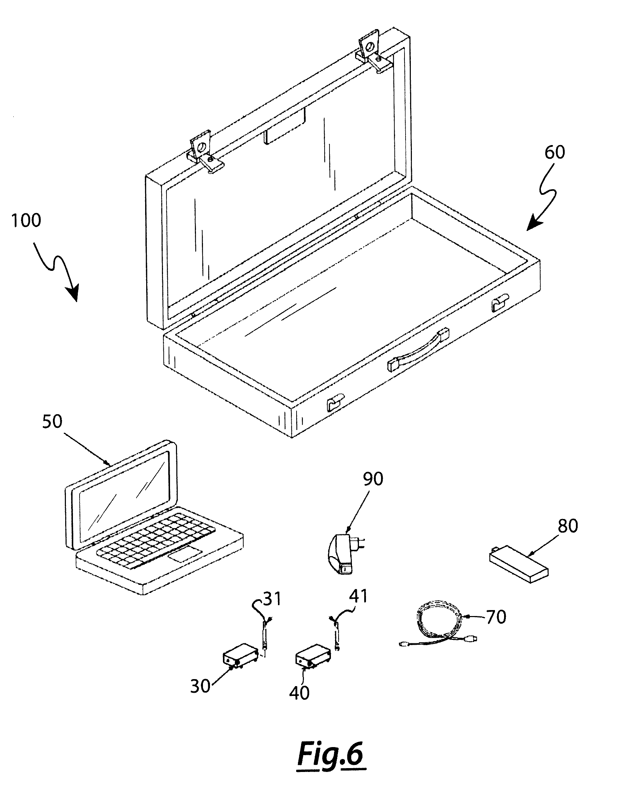

A detection kit (figure 6) comprises a PC 50, at least a devices pair 30,40, provided with respective antennas 31, 41, a ZigBee USB adapter 80, a AC adapter AC 90, and a USB cable 70 (as cable communication system, in case of failure of the wireless system). The kit can be conveniently contained in a carrying case 60.

By the kit and system, it is possible to measure the inclination of the flaps of an aircraft in a secure, accurate and easy way, since it is sufficient to position the devices pairs and switch on the PC 50, and all the measurements will be automatically carried out (of course, an only operator in the cockpit is needed who can move the flap, verify the carried-out measurement by the airplane and compare it with the measurement shown by the PC 50), including the determination of the zeros. Mounting of mechanical devices or wiring is not requires and therefore the preparation/installation work becomes extremely simple.

The adjustment of the flap angular excursion occurs instead by means of a dedicated device according to the prior art, which is utilized when the relevant data indicate a difference with what is visualized in the cockpit.

In the foregoing, the preferred embodiments have been illustrated and variations of the present inventions have been suggested, it is however to be understood that those skilled in the art will be able to modify and change them without falling outside the relevant scope of protection, as defined by the enclosed claims.

## Claims

1. Method for the detection of angular excursion of the aircraft wing flaps, comprising the use of:
- at least a pair of devices (30,40) comprising a first device (30) apt to be positioned on an internal or external flap of an aircraft wing, and a second device (40) apt to be positioned on a trailing edge of said aircraft wing in line with said first device, each device of said at least a pair of devices being provided with:
- an inclinometer, and
- a wireless communication module;
- a central elaboration unit (50) provided with
- a wireless communication module suitable to communicate individually with said first and second device of said pair of devices, and;
- a data acquisition module for the acquisition of inclination data of said first and second device;
a system for automated or operator reading of the angular excursion data as visualized in the cockpit of said aircraft;
a device dedicated to adjust the flap inclination; and in comprising the execution of the following subsequent steps for each device pair (30,40):
A. Positioning said first device (30) on an aircraft wing flap, and said second device (40) on said trailing edge of said aircraft wing in line with said first device;
B. Moving the relevant flap (20) till both said first and second device (30,40) provide the same numerical inclination data;
C. Verifying that there is coherence between said inclination numerical data and the zero value from said system for automated or operator reading of the angular excursion data with the flap in the final position of the preceding step;
D. In the case of the verification of step C is negative, adjust the inclination of the flap by said dedicated device, and repeat the step A to C till the verification of step C is positive;
E. Moving the flap in a position different from the final position of the preceding step;
F. Comparing, by said central elaboration unit (50), the value of the difference between the data provided by said first and second device with the value from said a system for automated or operator reading of the angular excursion data;
G. In the case the verification of step F is negative, adjust the inclination of the flap by said dedicated device, and repeat steps E to F until the verification is positive.

## Patentansprüche

1. Verfahren zum Erfassen der Winkelauslenkung der Flügelklappen eines Flugzeugs, umfassend die Verwendung von: zumindest einem Paar von Vorrichtungen (30, 40), umfassend eine erste Vorrichtung (30), die geeignet ist, um auf einer internen oder externen Klappe eines Flugzeugflügels positioniert zu werden, und eine zweiten Vorrichtung (40), die geeignet ist, um auf einer Hinterkante des Flugzeugflügels, in gleicher Linie liegend wie die erste Vorrichtung, positioniert zu werden, wobei jede Vorrichtung des zumindest einen Paares von Vorrichtungen versehen ist mit:
- einem Neigungsmesser, und
- einem drahtlosen Kommunikationsmodul;
- einer zentralen Auswerteeinheit (50), versehen mit
- einem drahtlosen Kommunikationsmodul, das geeignet ist, um einzeln mit jeder der ersten und zweiten Vorrichtungen des Paares von Vorrichtungen zu kommunizieren, und
- einem Datenakquisitionsmodul zur Erfassung von Neigungsdaten der ersten und zweiten Vorrichtung;
- ein System zum automatisierten oder anwender-basierten Auslesen der Daten der Winkelauslenkung, wie im Cockpit des Flugzeugs visualisiert;
eine Vorrichtung, die zum Anpassen der Klappenneigung bestimmt ist;
und umfassend die Durchführung der folgenden Schritte für jedes Paar von Vorrichtungen (30, 40):
A. Positionieren der ersten Vorrichtung (30) auf einer Flugzeugflügelklappe und der zweiten Vorrichtung (40) auf der Flügelhinterkante dieses Flugzeugflügels auf gleicher Linie liegend wie die erste Vorrichtung;
B. Bewegen der relevanten Klappe (20) bis sowohl die erste als auch die zweite Vorrichtung (30, 40) die gleichen numerischen Neigungsdaten bereitstellen;
C. Überprüfen, dass eine Kohärenz zwischen den numerischen Neigungsdaten und dem Null-Wert von dem System für das automatisierte oder anwender-basierte Auslesen der Winkelauslenkungsdaten mit der Klappe in der letzten Position des vorhergehenden Schritts vorliegt;
D. Für den Fall, dass die Überprüfung von Schritt C negativ ausfällt, Anpassen der Neigung der Klappen durch die dafür bestimmte Vorrichtung, und Wiederholen der Schritte A bis C bis die Überprüfung in Schritt C positiv ausfällt;
E. Bewegen der Klappe in eine Stellung, die von der letzten Stellung des vorhergehenden Schritts unterschiedlich ist;
F. Vergleichen, durch die zentrale Auswerteeinheit (50), des Wertes des Unterschieds zwischen den Daten, die von der ersten und zweiten Vorrichtung bereitgestellt werden, mit dem Wert von dem System zur automatisierten oder anwenderbasierten Auslese der Winkelauslenkungsdaten;
G. Im Falle, dass die Überprüfung von Schritt F negativ ausfällt, Anpassen der Neigung der Klappen durch die dafür bestimmte Vorrichtung und Wiederholen der Schritte E bis F, bis die Überprüfung positiv ausfällt.

## Revendications

1. Procédé de détection du débattement angulaire des volets d'ailes d'un avion, comprenant l'utilisation :
- d'au moins une paire de dispositifs (30, 40), dont un premier dispositif (30) apte à être positionné sur un volet interne ou externe d'une aile d'avion, et un second dispositif (40) apte à être positionné sur un bord de fuite de ladite aile d'avion dans l'alignement dudit premier dispositif, chaque dispositif de ladite au moins une paire de dispositifs étant pourvu :
- d'un inclinomètre, et
- d'un module de communication sans fil ;
- d'une unité d'élaboration centrale (50) dotée d'un module de communication sans fil apte à communiquer individuellement avec lesdits premier et second dispositifs de ladite paire de dispositifs ; et
- d'un module d'acquisition de données pour l'acquisition de données d'inclinaison desdits premier et second dispositifs ;
- d'un système de lecture automatisée ou par opérateur des données de débattement angulaire, telles que visualisées dans le cockpit dudit avion ;
- d'un dispositif destiné au réglage de l'inclinaison des volets ;
et comprenant l'exécution des étapes suivantes pour chaque paire de dispositifs (30, 40) :
A. Positionnement dudit premier dispositif (30) sur un volet d'aile d'avion, et dudit second dispositif (40) sur ledit bord de fuite de ladite aile d'avion dans l'alignement dudit premier dispositif ;
B. Déplacement du volet (20) correspondant jusqu'à ce que les deux premier et second dispositifs (30, 40) fournissent les mêmes données numériques d'inclinaison ;
C. Vérification de la cohérence entre lesdites données numériques d'inclinaison et la valeur zéro issue dudit système de lecture automatisée ou par opérateur des données de débattement angulaire, le volet étant dans la position finale de l'étape précédente ;
D. Dans le cas où la vérification de l'étape C serait négative, réglage de l'inclinaison du volet par ledit dispositif dédié et répétition de l'étape A à C jusqu'à ce que la vérification de l'étape C soit positive ;
E. Déplacement du volet dans une position différente de la position finale de l'étape précédente ;
F. Comparaison, par ladite unité d'élaboration centrale (50), de la valeur de la différence entre les données fournies par ledit premier et celles fournies par ledit second dispositif avec la valeur issue dudit système de lecture automatisée ou par opérateur des données de débattement angulaire ;
G. Dans le cas où la vérification de l'étape F serait négative, réglage de l'inclinaison du volet par ledit dispositif dédié, et répétition des étapes E à F jusqu'à ce que la vérification soit positive.
